# FASCICULE DE BREVET EUROPEEN

(11) **EP 4 281 652 B1**
(45) Date de publication et mention de la délivrance du brevet: **23.10.2024**
(21) Numéro de dépôt: 22705421.0
(22) Date de dépôt: 18.01.2022
(51) Int. Cl.: F01D 5/20, F01D 11/12, F01D 5/22

(54) **ROTOR DE TURBINE POUR UNE TURBOMACHINE**
TURBINENROTOR FÜR EINE TURBOMASCHINE
TURBINE ROTOR FOR A TURBOMACHINE

(30) Priorité: 21.01.2021 FR 2100570
(43) Date de publication de la demande: 29.11.2023
(73) Titulaire: SAFRAN AIRCRAFT ENGINES, 75015 Paris (FR)
(72) Inventeur: GIRARDEAU, Julian Nicolas, 77550 MOISSY-CRAMAYEL (FR); SILET, Benoit Guillaume, 77550 MOISSY-CRAMAYEL (FR)
(74) Mandataire: Regimbeau
(86) Numéro de dépôt international: PCT/FR2022/050095
(87) Numéro de publication internationale: WO 2022/157448

(56) Documents cités:
- FR-A1- 3 072 121
- FR-A1- 3 072 716
- FR-A1- 3 079 868
- US-A1- 2018 010 467

## Description

### DOMAINE DE L'INVENTION

L'invention se situe dans le domaine des turbomachines, notamment pour aéronef.

La présente invention concerne plus précisément un rotor de turbine, une turbine comprenant un tel rotor et une turbomachine équipée d'une telle turbine.

La turbine est de préférence une turbine basse pression.

### ETAT DE LA TECHNIQUE

Une turbomachine à gaz pour aéronef à double corps comprend successivement, d'amont en aval, un compresseur basse pression, un compresseur haute pression, une chambre de combustion, une turbine haute pression et une turbine basse pression. Dans la suite de la description et des revendications, l'amont et l'aval sont définis par rapport au sens général de circulation des gaz (de l'amont vers l'aval) à l'intérieur de la turbomachine et donc de la turbine.

Une turbine comprend plusieurs étages successifs, chaque étage comportant un rotor et un stator qui comprend un distributeur pourvu d'aubes fixes. La turbine s'étend selon un axe longitudinal qui correspond à l'axe de rotation du rotor.

Le rotor comprend un disque de rotor portant à sa périphérie une pluralité d'aubes qui s'étendent radialement ou sensiblement radialement depuis ce disque. La direction radiale est une direction perpendiculaire à l'axe de la turbine et coupant cet axe.

Chaque aube comprend une pale profilée qui se prolonge à son extrémité distale (c'est-à-dire celle la plus éloignée de l'axe de rotation) par un talon radialement externe. Ce talon radialement externe comprend une plateforme, qui délimite la surface extérieure de la veine d'écoulement du gaz circulant dans la turbine entre les pales et comprend également une léchette amont et une léchette aval qui s'étendent radialement vers l'extérieur depuis ladite plateforme et circonférentiellement de l'un des deux bords latéraux de cette plateforme à l'autre.

Lors de la rotation du rotor, les léchettes amont et aval coopèrent par frottement avec des éléments abradables fixes, montés en regard sur une face radialement interne du carter externe de la turbine et ce, afin d'assurer l'étanchéité. Ces différents éléments abradables sont montés circonférentiellement bout à bout pour former un anneau en un matériau abradable.

Un joint d'étanchéité du type à labyrinthe est ainsi formé et permet de limiter le débit d'air passant axialement à travers l'espace situé entre l'extrémité radialement externe du rotor et le stator, plus précisément entre l'extrémité radialement externe du rotor et l'anneau en un matériau abradable.

Le jeu rotor/stator est un élément primordial pour un bon rendement de la turbine basse pression. La limitation de ce jeu permet de maximiser le débit travaillant dans le rotor et de réduire le débit de fuite. L'étanchéité permet également de minimiser le cisaillement entre l'air de fuite circulant entre le talon radialement externe et le stator et l'air circulant dans la veine, ce cisaillement produisant des pertes dites « de mélange ».

Toutefois, le maintien d'un jeu faible entre les léchettes et l'anneau en un matériau abradable peut conduire par dilatation thermique différentielle à une situation de contact entre ces léchettes et le matériau abradable. Une telle situation peut même entraîner dans certains cas le blocage du rotor.

Dans l'état de la technique, on connaît des léchettes à bord rectiligne. Dans l'invention, on a envisagé de réaliser des découpes en sommet de léchette afin que les léchettes pénètrent dans le matériau abradable avec un effort de coupe minimal pour éviter les phénomènes de blocage du rotor. Toutefois, utiliser ces découpes risque de conduire à la formation d'un jeu supplémentaire entre le rotor et le stator et donc à des débits de fuite irréguliers.

Par ailleurs, les parties amont et aval de la plateforme peuvent présenter des formes diverses et comprendre des échancrures, afin notamment de diminuer la masse de la plateforme et de limiter les efforts dus à la force centrifuge subis par cette plateforme. Selon l'invention, on vise à améliorer encore les gains de masse vis-à-vis de ces conceptions.

On connaît également d'après le document US 2018/0 10 467 un rotor de turbine s'étendant autour d'un axe longitudinal, comprenant un aubage supportant à sa périphérie au moins une aube, la pale de l'aube étant pourvue à son extrémité radialement externe d'un talon, ce talon comprenant une plateforme munie d'une léchette amont et d'une léchette aval.

La plateforme présente un bord latéral avant et un bord latéral arrière par rapport au sens de rotation normal du rotor autour de l'axe longitudinal, ainsi qu'une portion extrados qui s'étend dudit bord latéral avant jusqu'à l'extrados de la pale.

Toutefois, ces léchettes ne présentent pas une forme en dents de scie, définissant des dents de forme triangulaire ou de rectangle tronqué munies de bords avant perpendiculaires à la plateforme et de bords radialement externe rectiligne et incliné vers l'arrière depuis le sommet du bord avant en direction de la plateforme.

En conséquence, le débit de fuite en sommet de léchette n'est pas limité.

### EXPOSE DE L'INVENTION

L'invention a pour but de limiter le débit de fuite en sommet de léchette.

A cet effet, l'invention concerne un rotor d'une turbine s'étendant autour d'un axe longitudinal, comprenant au moins un aubage supportant à sa périphérie au moins une aube, chaque aube comprenant une pale pourvue à son extrémité radialement externe d'un talon, ce talon comprenant une plateforme munie d'une léchette amont et d'une léchette aval qui s'étendent radialement vers l'extérieur depuis cette plateforme, la plateforme présentant un bord latéral avant et un bord latéral arrière par rapport au sens de rotation normal du rotor autour de l'axe longitudinal, et une portion extrados qui s'étend dudit bord latéral avant jusqu'à l'extrados de la pale.

Conformément à l'invention, la léchette amont et la léchette aval comprennent chacune des découpes en dent de scie de façon à former une dent avant et une dent arrière par rapport au sens de rotation normal du rotor autour de l'axe longitudinal, en ce que la dent avant et la dent arrière de chaque léchette présentent une forme triangulaire ou une forme de rectangle tronqué, en ce que la dent avant et la dent arrière de chaque léchette sont contigües, en ce que les dents avant des léchettes présentent un bord avant perpendiculaire à la plateforme et un bord radialement externe rectiligne et incliné vers l'arrière depuis le sommet du bord avant en direction de la plateforme et en ce que les dents arrière des léchettes présentent un bord de coupe perpendiculaire à la plateforme et un bord radialement externe rectiligne et incliné vers l'arrière depuis le sommet du bord de coupe en direction de la plateforme et en ce que la dent avant de chaque léchette est disposée sur la portion extrados de la plateforme.

Grâce à ces caractéristiques de l'invention, et notamment au fait que sur chaque léchette, la dent avant et la dent arrière sont contiguës et que la dent avant est disposée sur la portion extrados de la plateforme, il en résulte que l'espace vide situé entre le bord radialement externe de la dent avant et le bord de coupe de la dent arrière se trouve positionné à un endroit où la densité de débit de fuite est faible, car la pression aux bornes des léchettes est dicté par l'air circulant dans la veine. La pression du côté extrados de l'aube est plus faible que du côté intrados.

Inversement grâce aux caractéristiques précitées de l'invention, la dent arrière se trouve au contraire positionnée à un endroit où la densité de débit de fuite est forte.

Ainsi, les débits de fuite sont réduits.

Selon d'autres caractéristiques avantageuses et non limitatives de l'invention, prises seules ou en combinaison :
- le bord de coupe de la dent arrière de la léchette aval est disposé plus près de l'extrados que du bord latéral avant ;
- le bord de coupe de la dent arrière de la léchette amont est disposé dans l'alignement de l'extrados de la pale ;
- la hauteur du bord de coupe de la dent arrière de la léchette amont est supérieure à la hauteur du bord avant de la dent avant de cette même léchette amont et/ou la hauteur du bord de coupe de la dent arrière de la léchette aval est supérieure à la hauteur du bord avant de la dent avant de cette même léchette aval ;
- la plateforme comprend une portion amont de plateforme qui s'étend vers l'amont depuis la léchette amont, et cette portion amont de plateforme présente une forme de parallélépipède tronqué, dont la léchette amont définit l'un des côtés ;
- la plateforme comprend une portion aval de plateforme qui s'étend vers l'aval depuis ladite léchette aval et cette portion aval de plateforme présente une forme de parallélépipède tronqué, dont la léchette aval définit l'un des côtés.

L'invention concerne aussi une turbine s'étendant autour d'un axe longitudinal, comprenant un carter muni sur une face radialement interne d'un anneau en un matériau abradable. Conformément à l'invention, cette turbine comprend un rotor tel que précité, ce rotor est disposé de façon à ce que le sommet des dents arrière des léchettes amont et aval soit disposé en regard de l'anneau en un matériau abradable, de sorte que pour chaque léchette amont et chaque léchette aval, l'espace délimité par l'anneau en un matériau abradable, la dent avant et le bord de coupe de la dent arrière est positionné au droit de l'anneau en un matériau abradable.

Enfin, l'invention concerne une turbomachine, notamment pour aéronef, qui comprend une turbine telle que précitée.

### DESCRIPTION DES FIGURES

D'autres caractéristiques, buts et avantages de l'invention ressortiront de la description qui suit, qui est purement illustrative et non limitative, et qui doit être lue en regard des dessins annexés sur lesquels :
- la figure 1 représente une vue en coupe longitudinale partielle de la partie radialement externe d'une turbine basse pression de turbomachine ;
- la figure 2 est un schéma représentant en perspective et de façon partielle un mode de réalisation possible des aubes d'un rotor de turbine conforme à l'invention ;
- la figure 3 est un schéma représentant le talon radialement externe d'une aube conforme à l'invention ;
- la figure 4 est une vue en coupe schématique de deux portions d'aubes contigües et de leurs léchettes amont respectives ;
- la figure 5 est une vue en coupe schématique de deux portions d'aubes contigües et de leurs léchettes aval respectives.

### DESCRIPTION DETAILLEE DE L'INVENTION

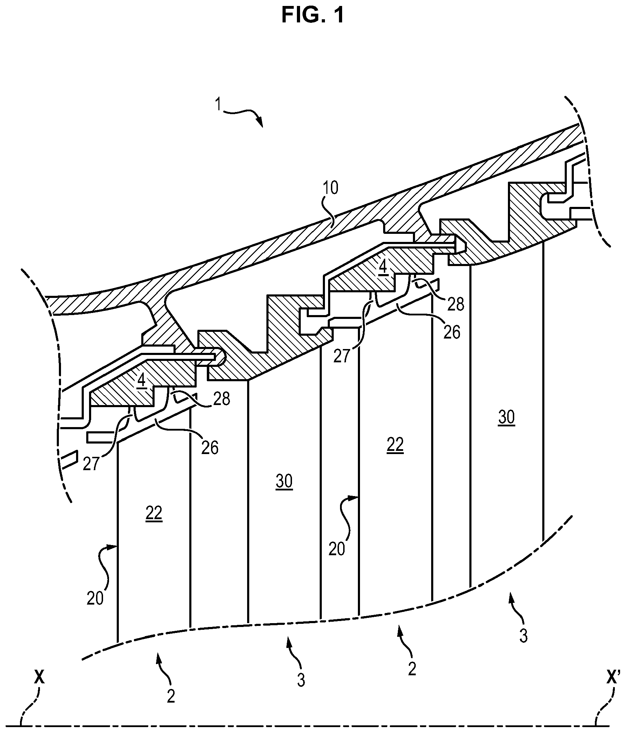

La figure 1 représente une partie d'une turbine basse pression de turbomachine, vue en coupe longitudinale (c'est-à-dire selon l'axe longitudinal X-X' de ladite turbine). Comme expliqué précédemment, cette turbine 1 comprend plusieurs étages successifs. Chaque étage comporte un rotor 2, pourvu d'aubes 20 et un stator qui comprend un distributeur 3, pourvu d'aubes fixes 30.

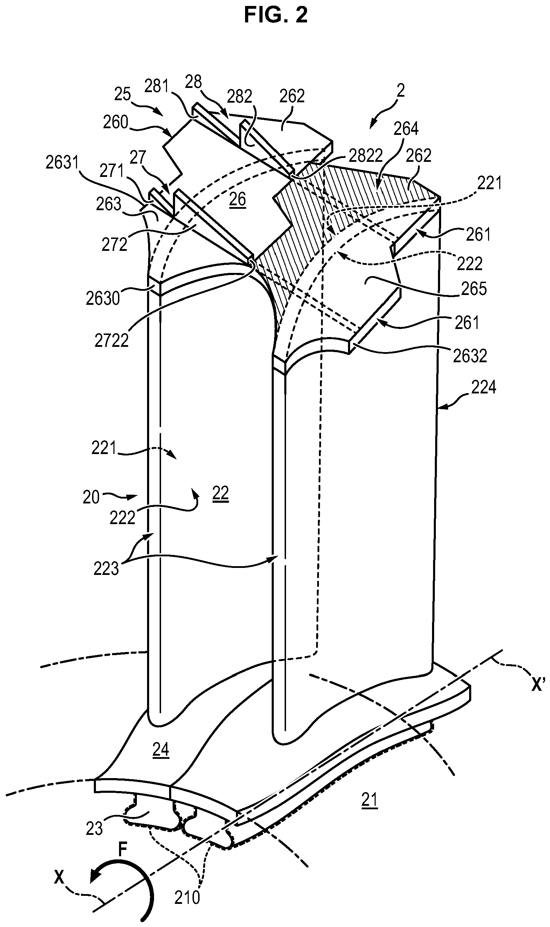

Comme on peut le voir sur la figure 2, le rotor 2 comprend un disque de rotor 21 (aubage) (représenté en pointillés), portant à sa périphérie externe au moins une aube 20, de préférence les aubes 20 qui s'étendent radialement ou sensiblement radialement depuis ce disque.

Le rotor 2 est entraîné en rotation autour de son axe de rotation X-X' et selon un sens de rotation normal représenté par la flèche F en figure 2. Par "sens de rotation normal", on entend le sens dans lequel le rotor tourne pendant le fonctionnement de la turbine. En outre, les différents disques de rotor 21 de la turbine sont assemblés entre eux et entraînés en rotation autour de l'axe longitudinal X-X'.

Chaque aube 20 comprend une pale profilée 22 et un pied radialement interne 23, ayant par exemple une forme en queue d'aronde ou analogue, monté dans une alvéole 210 de forme correspondante ménagée à la périphérie du disque de rotor 21. La pale 22 est séparée du pied 23, par un talon radialement interne 24. Enfin, un talon radialement externe 25 s'étend depuis l'extrémité radialement externe (ou extrémité distale) de la pale 22.

Chaque pale 22 présente un extrados 221 et un intrados 222, un bord d'attaque 223 et un bord de fuite 224.

Lorsque les différentes aubes 20 sont fixées sur le disque de rotor 21, leurs talons radialement externes 25 sont disposés bord à bord de manière à former une couronne circonférentielle rotative délimitant une surface de révolution autour de l'axe X-X' de rotation du disque.

Plus précisément, chaque talon radialement externe 25 comprend une plateforme 26, qui délimite la surface extérieure de la veine d'écoulement du gaz circulant dans la turbine entre les pales 22 et qui présente un premier et un deuxième bords latéraux opposés 260, 261. Le bord 260 est dénommé "bord latéral avant" et le bord 261, "bord latéral arrière". Dans la suite de la description et des revendications, les termes "avant" et "arrière" sont définis par rapport au sens normal de rotation du rotor. On notera également que le bord latéral avant 260 est celui situé du côté extrados de la pale 22 et que le bord latéral arrière 261 est celui situé du côté intrados de la pale 22.

En outre, chaque talon radialement externe 25 comprend également une léchette d'étanchéité amont 27 et une léchette d'étanchéité aval 28, qui s'étendent radialement ou sensiblement radialement vers l'extérieur depuis la plateforme 26 et circonférentiellement d'un bord latéral 260 à l'autre 261 de cette plateforme.

Lorsque les différentes aubes 20 sont fixées sur le disque de rotor 21, comme représenté sur la figure 2, leurs plateformes radialement externes 26 respectives sont disposées bout à bout de sorte que le bord latéral arrière 261 d'une plateforme soit au contact du bord latéral avant 260 de la plateforme suivante et que les différentes léchettes amont 27 (respectivement les différentes léchettes aval 28) se trouvent également disposées bord à bord de manière à former un anneau rotatif amont d'axe X-X', (respectivement un anneau rotatif aval).

Comme on peut le voir sur la figure 1, les léchettes amont 27 et aval 28 sont disposées en regard d'un anneau en un matériau abradable 4, fixé en regard sur une face radialement interne du carter externe 10 de la turbine 1 et ce, afin de former un joint d'étanchéité du type à labyrinthe.

Dans l'exemple de réalisation représenté sur la figure 2, on peut voir que le bord latéral avant 260 et le bord latéral arrière 261 présentent, dans la région centrale de la plateforme 26, c'est-à-dire entre les deux léchettes 27 et 28, un contour en forme de ligne brisée. D'autres formes sont envisageables dès lors qu'elles sont complémentaires l'une de l'autre et permettent le montage précité.

En outre, la plateforme 26 présente une portion aval de plateforme 262, qui s'étend vers l'aval depuis ladite léchette aval 28. De façon similaire, la plateforme 26 présente une portion amont de plateforme 263, qui s'étend vers l'amont depuis ladite léchette amont 27.

Sur la figure 2, on a volontairement omis de représenter intégralement les léchettes amont et aval de l'aube située sur la droite de la figure, afin de mieux visualiser la forme de la plateforme 26 et de ses portions amont 262 et aval 263. Ces léchettes sont représentées par des pointillés.

Par ailleurs et comme cela apparait mieux sur la figure 2, la plateforme 26 présente une portion, dite "portion extrados" 264, qui s'étend du bord latéral avant 260 jusqu'à l'extrados 221 de la pale 22 et une portion, dite "portion intrados" 265, qui s'étend de l'intrados 222 de la pale 22 jusqu'au bord latéral arrière 261. Sur la figure 2, la portion extrados 264 a été représentée de façon hachurée.

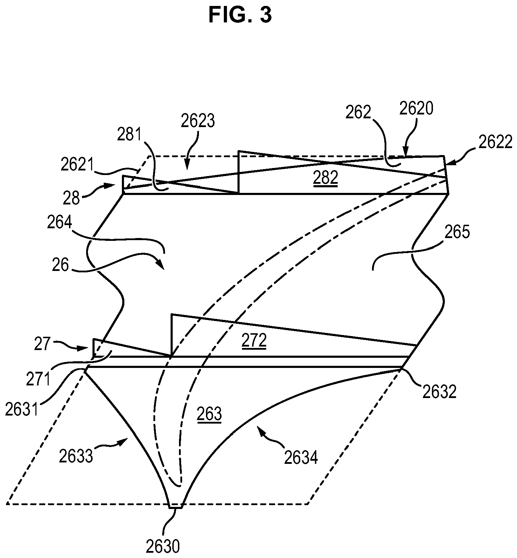

Comme cela apparaît mieux sur la figure 3, et selon un mode de réalisation possible de l'invention, la portion aval de plateforme 262 présente la forme d'un parallélépipède et comprend donc un bord aval 2620, du côté aval de la plateforme 26, un bord latéral avant 2621 et un bord latéral arrière 2622, (voir contour en pointillés). Enfin, le dernier côté de ce parallélépipède est délimité par la léchette aval 28.

Selon un mode de réalisation possible de l'invention, la portion amont de plateforme 263 présente également la forme d'un parallélépipède et comprend un bord amont 2630, du côté amont de la plateforme 26, un bord latéral avant 2631 et un bord latéral arrière 2632, (voir contour en pointillés). Enfin, le dernier côté de ce parallélépipède est délimité par la léchette amont 27.

Selon d'autres modes de réalisation possibles de l'invention, le parallélépipède formant la portion amont de plateforme 263 et/ou le parallélépipède formant la portion aval de plateforme 262 est tronqué et présente une ou plusieurs échancrures de façon à réduire la masse de la plateforme 26.

Sur l'exemple de réalisation représenté sur les figures, les deux portions 263 et 262 sont tronquées et des exemples d'échancrure sont décrits ci-après.

Ainsi, de préférence, la portion aval de plateforme 262 comprend une échancrure 2623, ménagée à l'angle entre le bord aval 2620 et le bord latéral avant 2621.

De préférence, cette échancrure 2623 présente un contour rectiligne. Ce contour pourrait également présenter d'autres formes, par exemple une forme courbe, de préférence concave.

De préférence encore, cette échancrure 2623 s'étend depuis un point du bord latéral avant 2621 situé à proximité de la léchette aval 28 jusqu'à un point du bord aval 2620 situé au droit du bord de fuite 224 de la pale 22.

De préférence, la portion amont de plateforme 263 comprend deux échancrures, à savoir une échancrure avant 2633, ménagée à l'angle entre le bord latéral avant 2631 et le bord amont 2630 et une échancrure arrière 2634, ménagée à l'angle entre le bord latéral arrière 2632 et le bord amont 2630.

De préférence, ces deux échancrures 2633 et 2634 présentent un contour incurvé et concave. D'autres formes pourraient être envisagées, par exemple une forme rectiligne.

De préférence encore, l'échancrure avant 2633 s'étend depuis un point du bord latéral avant 2631 situé à proximité de la léchette amont 27 jusqu'à un point du bord amont 2630 situé au droit du bord d'attaque 223, coté extrados 221, de façon à retirer un maximum de matière de la portion amont de plateforme tout en conservant cette portion amont radialement au-dessus de la pale 22.

De préférence encore, l'échancrure arrière 2634 s'étend depuis un point du bord latéral arrière 2632 situé à proximité de la léchette amont 27 jusqu'à un point du bord amont 2630 situé au droit du bord d'attaque 223, coté intrados 222, pour les mêmes raisons.

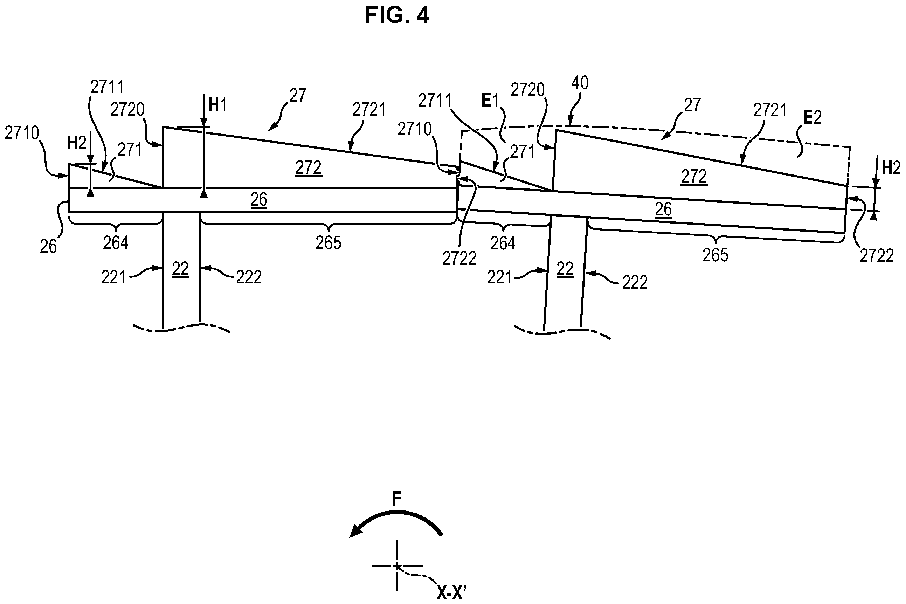

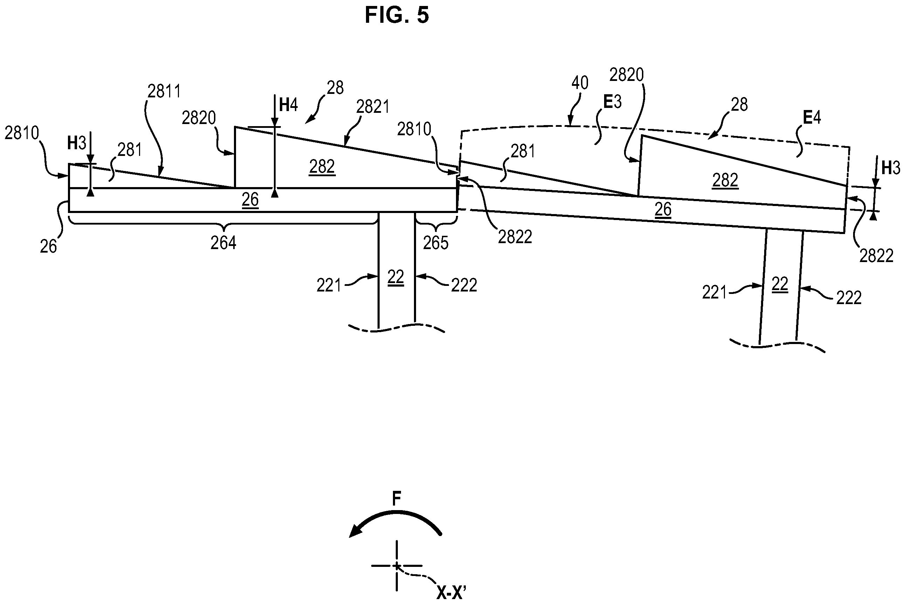

Conformément à l'invention et comme cela apparait mieux sur les figures 4 et 5, la léchette amont 27 et la léchette aval 28 présentent des découpes en dent de scie de façon à former deux dents contigües, à savoir pour la léchette amont 27, une dent avant 271 et une dent arrière 272 et pour la léchette aval 28, une dent avant 281 et une dent arrière 282, l'avant et l'arrière étant définis par rapport au sens normal de rotation du rotor autour de l'axe X-X' (flèche F)
Comme on peut le voir sur ces figures, les dents avant 271, 281 présentent chacune un bord avant 2710, 2810 et les dents arrière 272, 282, un bord de coupe 2720, 2820 également orienté vers l'avant par rapport au sens de rotation et qui est configuré de sorte à pourvoir cisailler le matériau abradable 4 en cas de contact avec celui-ci.

Les dents avant 271, 281 ou arrière 272, 282 présentent de préférence une forme triangulaire ou une forme de rectangle tronqué.

Dans l'exemple de réalisation représenté sur les figures, ce sont les dents avant 271, 281 qui sont triangulaires et les dents arrière 272, 282 qui présentent une forme de rectangle tronqué.

La dent avant 271 présente un bord radialement externe 2711 incliné vers l'arrière en direction de la plateforme 26 depuis le sommet du bord avant 2710 jusqu'à la base du bord de coupe 2720 de la dent arrière 272, tandis que la dent avant 281 présente un bord radialement externe 2811 incliné vers l'arrière depuis le sommet du bord avant 2810 jusqu'à la base du bord de coupe 2820 de la dent arrière 282.

La dent arrière 272 présente un bord radialement externe 2721 incliné en direction de la plateforme 26 depuis le sommet du bord de coupe 2720 jusqu'à un bord arrière 2722 de la dent arrière 272 (mieux visible sur la figure 2). De même, la dent arrière 282 présente un bord radialement externe 2821 incliné en direction de la plateforme 26 depuis le sommet du bord de coupe 2820 jusqu'à un bord arrière 2822 de la dent arrière 282.

De préférence, les bords avant 2710, 2810, et les bords arrière 2722, 2822 sont perpendiculaires au plan de la plateforme 26 ou légèrement inclinés, de sorte que lorsque deux plateformes 26 sont placées bout à bout, le bord arrière 2722 de la dent arrière 272 de la léchette amont 27 d'une plateforme est au contact du bord avant 2710 de la dent avant 271 de la léchette amont 27 de la plateforme contigüe, pour assurer la continuité des léchettes amont sur la circonférence. Il en est de même pour les léchettes aval 28.

De préférence également, le bord arrière 2722 de la léchette amont 27 est de même hauteur H2 que son bord avant 2710, de sorte que lorsque deux aubes 2 (et donc deux plateformes 26) sont placées côte à côte, le bord arrière de l'une soit au même niveau que le bord avant de l'autre. De préférence, il en est de même pour la hauteur H3 du bord avant 2810 et du bord arrière 2822.

Les bords de coupe 2720, 2820 sont de préférence perpendiculaires au plan de la plateforme 26.

De préférence, le bord de coupe 2720 de la dent arrière est d'une hauteur supérieure au bord avant 2710 de la dent avant 271 et c'est pour cette raison qu'il va cisailler le matériau abradable 4, (hauteur H1 entre le sommet du bord de coupe 2720 et la plateforme 26 supérieure à la hauteur H2 entre le sommet du bord avant 2710 et la plateforme 26). De même, de préférence, la hauteur H4 du bord de coupe 2820 de la dent arrière 282 est supérieure à la hauteur H3 du bord avant 2810.

Dans le mode de réalisation qui vient d'être décrit, les bords radialement externes 2711, 2721, 2811, 2821 présentent un contour rectiligne. Toutefois, au moins l'un de ces contours pourrait être légèrement courbe et convexe.

Conformément à l'invention, les découpes dans les léchettes amont et aval sont faites de façon que les dents avant et arrière soient positionnées sur la plateforme 26 en des points permettant de compenser les irrégularités du débit de fuite.

La pression de l'air circulant dans la veine et circulant donc également entre la plateforme 26 et l'anneau de matériau abradable 4 est plus élevée à l'amont qu'à l'aval, ce qui permet à l'air de circuler dans la turbine 1. Par ailleurs, la pression qui s'exerce sur l'intrados 222 est supérieure à celle qui s'exerce sur l'extrados 221 de la pale 22, de sorte que le rotor 2 tourne.

En conséquence, la pression P _{amont ext} exercée par l'air de fuite sur la léchette amont 27 du côté extrados est supérieure à la pression P _{amont int} exercée sur la léchette amont 27 du côté intrados, qui est elle-même supérieure à la pression P _{aval ext} exercée par l'air de fuite sur la léchette aval 28 du côté extrados, cette dernière étant elle-même supérieure à la pression P _{aval int} exercée par l'air de fuite sur la léchette aval 28 du côté intrados. Par "air de fuite", on entend l'air qui circule entre la plateforme 26 et le matériau abradable 4.

Par ailleurs, sur la moitié droite des figures 4 et 5, on a représenté par un trait mixte, le niveau 40 auquel se situe le matériau abradable 4, lorsque le rotor 2 est monté dans la turbine 1.

Sur la léchette amont 27, on réalise les découpes de façon que la dent avant 271 soit positionnée sur la portion extrados 264 de la plateforme 26. Ainsi, comme on peut le voir sur la figure 4, l'espace E1 délimité par le matériau abradable 4, la dent avant 271 et le bord de coupe 2720 de la dent arrière 272 se trouve positionné au droit de la portion extrados 264 de la plateforme, c'est-à-dire à un endroit où le débit de fuite est faible. De plus, comme la hauteur H2 de la dent avant 271 est préférentiellement inférieure à la hauteur H1 de la dent arrière 272, cet espace E1 est d'autant plus grand.

Inversement, et compte-tenu du fait que les dents avant 271 et arrière 272 sont contigües, la dent arrière 272 se trouve positionnée principalement sur la portion intrados 265 de la plateforme 26 et à l'endroit où le débit de fuite est plus fort, en limitant ainsi les fuites. L'espace E2 qui s'étend entre la dent arrière 272 et le matériau abradable 4 (ligne 40) est d'une surface réduite, ce qui limite le débit de fuite à cet endroit.

De préférence encore, les dents sont positionnées de sorte que le bord de coupe 2720 de la dent arrière 272 soit disposé plus près de l'extrados 221 de la pale 22 que du bord latéral avant 260 et de façon encore préférée, qu'il soit disposé dans l'alignement de l'extrados 221 de la pale 22. Ainsi, l'espace E1 situé au-dessus de l'espace extrados 264 est le plus large possible.

La section de fuite totale, c'est-à-dire la somme des aires E1 et E2 reste inchangée par rapport à l'état de la technique, mais le débit de fuite est réduit.

De façon similaire, sur la léchette aval 28, on réalise les découpes de façon que la dent avant 281 soit positionnée sur la portion extrados 264 de la plateforme 26. Ainsi, comme on peut le voir sur la figure 5, l'espace E3 délimité par le matériau abradable 4, la dent avant 281 et le bord de coupe 2820 de la dent arrière 282 se trouve positionné au droit de la portion extrados 264 de la plateforme, c'est-à-dire à un endroit où le débit de fuite est plus faible.

De préférence encore, les dents sont positionnées de sorte que le bord de coupe 2820 de la dent arrière 282 soit disposé plus près de l'extrados 221 que du bord latéral avant 260.

La section de fuite totale, c'est-à-dire la somme des aires E3 et E4 reste inchangée par rapport à l'état de la technique, mais le débit de fuite est réduit.

Dans le cas où la plateforme 26 n'est pas tronquée, on observe une réduction du débit de fuite et dans le cas où la plateforme 26 présente des échancrures telles que les échancrures 2623, 2633 et 2634 précitées, ce gain est encore accru.

## Revendications

1. Rotor (2) de turbine (1) s'étendant autour d'un axe longitudinal (X-X'), comprenant un aubage supportant à sa périphérie au moins une aube (20), chaque aube (20) comprenant une pale (22) pourvue à son extrémité radialement externe d'un talon (25), ce talon (25) comprenant une plateforme (26) munie d'une léchette amont (27) et d'une léchette aval (28) qui s'étendent radialement vers l'extérieur depuis cette plateforme (26), la plateforme (26) présentant un bord latéral avant (260) et un bord latéral arrière (261) par rapport au sens de rotation normal du rotor (2) autour de l'axe longitudinal (X-X'), et une portion extrados (264) qui s'étend dudit bord latéral avant (260) jusqu'à l'extrados de la pale (22), **caractérisée en ce que** la léchette amont (27) et la léchette aval (28) comprennent chacune des découpes en dent de scie de façon à former une dent avant (271, 281) et une dent arrière (272, 282) par rapport au sens de rotation normal du rotor (2) autour de l'axe longitudinal (X-X'), **en ce que** la dent avant (271, 281) et la dent arrière (272, 282) de chaque léchette (27, 28) présentent une forme triangulaire ou une forme de rectangle tronqué, **en ce que** la dent avant (271, 281) et la dent arrière (272, 282) de chaque léchette (27, 28) sont contigües, **en ce que** les dents avant (271, 281) des léchettes (27, 28) présentent un bord avant (2710, 2810) perpendiculaire à la plateforme (26) et un bord radialement externe (2711, 2811) rectiligne et incliné vers l'arrière depuis le sommet du bord avant (2710, 2810) en direction de la plateforme (26) et **en ce que** les dents arrière (272, 282) des léchettes (27, 28) présentent un bord de coupe (2720, 2820) perpendiculaire à la plateforme (26) et un bord radialement externe (2721, 2821) rectiligne et incliné vers l'arrière depuis le sommet du bord de coupe (2720, 2820) en direction de la plateforme (26) et **en ce que** la dent avant (271, 281) de chaque léchette (27, 28) est disposée sur la portion extrados (264) de la plateforme (26).

2. Rotor (2) selon la revendication 1, **caractérisé en ce que** le bord de coupe (2820) de la dent arrière (282) de la léchette aval (28) est disposé plus près de l'extrados (221) de la pale (22) que du bord latéral avant (260).

3. Rotor (2) selon la revendication 1 ou 2, **caractérisé en ce que** le bord de coupe (2720) de la dent arrière (272) de la léchette amont (27) est disposé dans l'alignement de l'extrados (221) de la pale (22).

4. Rotor (2) selon l'une quelconque des revendications précédentes, **caractérisé en ce que** la hauteur (H1) du bord de coupe (2720) de la dent arrière (272) de la léchette amont (27) est supérieure à la hauteur (H2) du bord avant (2710) de la dent avant (271) de cette même léchette amont (27) et/ou **en ce que** la hauteur (H4) du bord de coupe (2820) de la dent arrière (282) de la léchette aval (28) est supérieure à la hauteur (H3) du bord avant (2810) de la dent avant (281) de cette même léchette aval (28).

5. Rotor (2) selon l'une quelconque des revendications précédentes, **caractérisé en ce que** la plateforme (26) comprend une portion amont de plateforme (263) qui s'étend vers l'amont depuis la léchette amont (27), et cette portion amont de plateforme (263) présente une 6orme de parallélépipède tronqué, dont la léchette amont (27) définit l'un des côtés.

6. Rotor (2) selon l'une quelconque des revendications précédentes, **caractérisé en ce que** la plateforme (26) comprend une portion aval de plateforme (262) qui s'étend vers l'aval depuis ladite léchette aval (28) et cette portion aval de plateforme (262) présente une forme de parallélépipède tronqué, dont la léchette aval (28) définit l'un des côtés.

7. Turbine (1) s'étendant autour d'un axe longitudinal (X-X'), comprenant un carter externe (10) muni sur une face radialement interne d'un anneau en un matériau abradable (4), **caractérisée en ce qu'**elle comprend un rotor (2) selon l'une quelconque des revendications précédentes et **en ce que** ce rotor (2) est disposé de façon à ce que le sommet des dents arrière (272, 282) des léchettes amont (27) et aval (28) soit disposé en regard de l'anneau en un matériau abradable (4), de sorte que pour chaque léchette amont (27) et chaque léchette aval (28), l'espace (E1, E3) délimité par l'anneau en un matériau abradable (4), la dent avant (271, 281) et le bord de coupe (2720, 2820) de la dent arrière (272, 282) est positionné au droit de l'anneau en un matériau abradable (4).

8. Turbomachine, notamment pour aéronef, **caractérisée en ce qu'**elle comprend une turbine (1) selon la revendication 7.

## Patentansprüche

1. Rotor (2) einer Turbine (1), der sich um eine Längsachse (X-X') erstreckt, umfassend eine Beschaufelung, die an ihrem Umfang mindestens eine Schaufel (20) trägt, wobei jede Schaufel (20) ein Blatt (22) aufweist, das an seinem radial äußeren Ende mit einem Absatz (25) versehen ist, wobei dieser Absatz (25) eine Plattform (26) umfasst, die mit einer stromaufwärts gelegenen Lippe (27) und einer stromabwärts gelegenen Lippe (28) versehen ist, die sich von dieser Plattform (26) aus radial nach außen erstrecken, wobei die Plattform (26) eine vordere Seitenkante (260) und eine hintere Seitenkante (261) in Bezug auf die normale Drehrichtung des Rotors (2) um die Längsachse (X-X') und einen flügeloberseitigen Abschnitt (264) aufweist, der sich von der vorderen Seitenkante (260) bis zur Flügeloberseite des Blatts (22) erstreckt, **dadurch gekennzeichnet, dass** die stromaufwärts gelegene Lippe (27) und die stromabwärts gelegene Lippe (28) jeweils sägezahnförmige Ausschnitte umfassen, um einen vorderen Zahn (271, 281) und einen hinteren Zahn (272, 282) in Bezug auf die normale Drehrichtung des Rotors (2) um die Längsachse (X-X') zu bilden, dass der vordere Zahn (271, 281) und der hintere Zahn (272, 282) jeder Lippe (27, 28) eine dreieckige Form oder eine Form eines abgestumpften Rechtecks aufweisen, dass der vordere Zahn (271, 281) und der hintere Zahn (272, 282) jeder Lippe (27, 28) aneinander angrenzen, dass die vorderen Zähne (271, 281) der Lippen (27, 28) eine Vorderkante (2710, 2810) senkrecht zur Plattform (26) und eine radial äußere Kante (2711, 2811) aufweisen, die geradlinig und nach hinten von der Spitze der Vorderkante (2710, 2810) in Richtung der Plattform (26) geneigt ist und dass die hinteren Zähne (272, 282) der Lippen (27, 28) eine Schnittkante (2720, 2820) senkrecht zur Plattform (26) und eine radial äußere Kante (2721, 2821) aufweisen, die geradlinig und von der Spitze der Schnittkante (2720, 2820) nach hinten in Richtung der Plattform (26) geneigt ist, und dass der vordere Zahn (271, 281) jeder Lippe (27, 28) auf dem flügeloberseitigen Abschnitt (264) der Plattform (26) angeordnet ist.

2. Rotor (2) nach Anspruch 1, **dadurch gekennzeichnet, dass** die Schnittkante (2820) des hinteren Zahns (282) der stromabwärts gelegenen Lippe (28) näher an der Oberseite (221) des Blattes (22) als an der vorderen Seitenkante (260) angeordnet ist.

3. Rotor (2) nach Anspruch 1 oder 2, **dadurch gekennzeichnet, dass** die Schnittkante (2720) des hinteren Zahns (272) der stromaufwärts gelegenen Lippe (27) in einer Linie mit der Oberseite (221) des Blattes (22) angeordnet ist.

4. Rotor (2) nach einem der vorhergehenden Ansprüche, **dadurch gekennzeichnet, dass** die Höhe (H1) der Schnittkante (2720) des hinteren Zahns (272) der stromaufwärts gelegenen Lippe (27) größer ist als die Höhe (H2) der Vorderkante (2710) des vorderen Zahns (271) derselben stromaufwärts gelegenen Lippe (27) und/oder dass die Höhe (H4) der Schnittkante (2820) des hinteren Zahns (282) der stromabwärts gelegenen Lippe (28) größer ist als die Höhe (H3) der Vorderkante (2810) des vorderen Zahns (281) derselben stromabwärts gelegenen Lippe (28).

5. Rotor (2) nach einem der vorhergehenden Ansprüche, **dadurch gekennzeichnet, dass** die Plattform (26) einen stromaufwärts gelegenen Plattformabschnitt (263) umfasst, der sich von der stromaufwärts gelegenen Lippe (27) stromaufwärts erstreckt, und dieser stromaufwärts gelegene Plattformabschnitt (263) eine Form eines abgestumpften Parallelepipeds aufweist, von dem die stromaufwärts gelegene Lippe (27) eine der Seiten definiert.

6. Rotor (2) nach einem der vorhergehenden Ansprüche, **dadurch gekennzeichnet, dass** die Plattform (26) einen stromabwärts gelegenen Plattformabschnitt (262) umfasst, der sich von der stromabwärts gelegenen Lippe (28) stromabwärts erstreckt, und dieser stromabwärts gelegene Plattformabschnitt (262) eine Form eines abgestumpften Parallelepipeds aufweist, von dem die stromabwärts gelegene Lippe (28) eine der Seiten definiert.

7. Turbine (1), die sich um eine Längsachse (X-X') erstreckt, umfassend ein äußeres Gehäuse (10), das auf einer radial inneren Seite mit einem Ring aus einem abreibbaren Material (4) versehen ist, **dadurch gekennzeichnet, dass** sie einen Rotor (2) nach einem der vorhergehenden Ansprüche umfasst und dass dieser Rotor (2) derart angeordnet ist, dass die Spitze der hinteren Zähne (272, 282) der stromaufwärts (27) und stromabwärts (28) gelegenen Lippen dem Ring aus einem abreibbaren Material (4) zugewandt angeordnet ist, so dass für jede stromaufwärts gelegene Lippe (27) und jede stromabwärts gelegene Lippe (28) der Raum (E1, E3), der durch den Ring aus einem abreibbaren Material (4), den vorderen Zahn (271, 281) und die Schnittkante (2720, 2820) des hinteren Zahns (272, 282) begrenzt wird, senkrecht zu dem Ring aus einem abreibbaren Material (4) positioniert ist.

8. Turbomaschine, insbesondere für ein Fluggerät, **dadurch gekennzeichnet, dass** sie eine Turbine (1) nach Anspruch 7 umfasst.

## Claims

1. A rotor (2) of a turbine (1) extending around a longitudinal axis (X-X'), comprising at least one blading bearing at its periphery at least one blade (20), each blade (20) comprising an airfoil (22) provided at its radially outer end with a heel (25), this heel (25) comprising a platform (26) equipped with an upstream lip (27) and a downstream lip (28) which extend radially outward from this platform (26), the platform (26) having a front lateral edge (260) and a back lateral edge (261) with respect to the normal direction of rotation of the rotor (2) about the longitudinal axis (X-X'), and a suction face portion (264) which extends from said front lateral edge (260) to the suction face of the airfoil (22), **characterized in that** the upstream lip (27) and the downstream lip (28) each comprise sawtooth-shaped cut-outs such as to form a front tooth (271, 281) and a back tooth (272, 282) with respect to the normal direction of rotation of the rotor (2) about the longitudinal axis (X-X'), **in that** the front tooth (271, 281) and the back tooth (272, 282) of each lip (27, 28) have a triangular shape or a truncated rectangle shape, **in that** the front tooth (271, 281) and the back tooth (272, 282) of each lip (27, 28) are contiguous, **in that** the front teeth (271, 281) of the lips (27, 28) have a front edge (2710, 2810) perpendicular to the platform (26) and a radially outer edge (2711, 2811) which is straight and inclined backward from the apex of the front edge (2710, 2810) in the direction of the platform (26) and **in that** the back teeth (272, 282) of the lips (27, 28) have a cutting edge (2720, 2820) perpendicular to the platform (26) and a radially outer edge (2721, 2821) which is straight and inclined backward from the apex of the cutting edge (2720, 2820) in the direction of the platform (26) and **in that** the front tooth (271, 281) of each lip (27, 28) is disposed on the suction face portion (264) of the platform (26).

2. The rotor (2) as claimed in claim 1, **characterized in that** the cutting edge (2820) of the back tooth (282) of the downstream lip (28) is disposed nearer to the suction face (221) of the airfoil (22) than to the front lateral edge (260).

3. The rotor (2) as claimed in claim 1 or 2, **characterized in that** the cutting edge (2720) of the back tooth (272) of the upstream lip (27) is disposed in alignment with the suction face (221) of the airfoil (22).

4. The rotor (2) as claimed in any of the preceding claims, **characterized in that** the height (H1) of the cutting edge (2720) of the back tooth (272) of the upstream lip (27) is greater than the height (H2) of the front edge (2710) of the front tooth (271) of this same upstream lip (27) and/or **in that** the height (H4) of the cutting edge (2820) of the back tooth (282) of the downstream lip (28) is greater than the height (H3) of the front edge (2810) of the front tooth (281) of this same downstream lip (28).

5. The rotor (2) as claimed in any of the preceding claims, **characterized in that** the platform (26) comprises an upstream platform portion (263) which extends upstream from the upstream lip (27), and this upstream platform portion (263) has a truncated parallelepipedal shape, the upstream lip (27) of which defines one of the sides.

6. The rotor (2) as claimed in any of the preceding claims, **characterized in that** the platform (26) comprises a downstream platform portion (262) which extends downstream from said downstream lip (28) and this downstream platform portion (262) has a truncated parallelepipedal shape, the downstream lip (28) of which defines one of the sides.

7. A turbine (1) extending around a longitudinal axis (X-X'), comprising an outer casing (10) equipped on a radially inner face with an abradable material ring (4), **characterized in that** it comprises a rotor (2) as claimed in any of the preceding claims and **in that** this rotor (2) is disposed such that the apex of the back teeth (272, 282) of the upstream (27) and downstream lips (28) is disposed opposite the abradable material ring (4), such that for each upstream lip (27) and each downstream lip (28), the space (E1, E3) delimited by the abradable material ring (4), the front tooth (271, 281) and the cutting edge (2720, 2820) of the back tooth (272, 282) is positioned plumb with the abradable material ring (4).

8. A turbomachine, particularly for aircraft, **characterized in that** it comprises a turbine (1) as claimed in claim 7.
